# FASCICULE DE BREVET EUROPEEN

(11) **EP 4 457 190 B1**
(45) Date de publication et mention de la délivrance du brevet: **02.12.2026**
(21) Numéro de dépôt: 22839719.6
(22) Date de dépôt: 16.12.2022
(51) Int. Cl.: C03C 17/36

(54) **MATERIAU COMPORTANT UN EMPILEMENT PLURI-COUCHES FONCTIONNELLES A COUCHE DIELECTRIQUE DE NITRURE A BASE D'ALUMINIUM ET DE SILICIUM ET VITRAGE COMPORTANT CE MATERIAU**
MATERIAL MIT EINEM STAPEL AUS MEHREREN FUNKTIONSSCHICHTEN MIT EINER DIELEKTRISCHEN SCHICHT AUS ALUMINIUM UND SILICIUMNITRID SOWIE VERGLASUNG MIT DIESEM MATERIAL
MATERIAL COMPRISING A STACK OF MULTIPLE FUNCTIONAL LAYERS WITH A DIELECTRIC LAYER OF ALUMINIUM AND SILICON NITRIDE, AND GLAZING COMPRISING SAID MATERIAL

(30) Priorité: 29.12.2021 FR 2114648
(43) Date de publication de la demande: 06.11.2024
(73) Titulaire: SAINT-GOBAIN GLASS FRANCE, 92400 Courbevoie (FR)
(72) Inventeur: GUIMARD, Denis, 93300 Aubervilliers (FR); MOUSTAFA, Adnan, 93300 Aubervilliers (FR); PEYROT, David, 93300 Aubervilliers (FR)
(74) Mandataire: Saint-Gobain Recherche
(86) Numéro de dépôt international: PCT/EP2022/086332
(87) Numéro de publication internationale: WO 2023/126214

(56) Documents cités:
- EP-A1- 0 847 965
- WO-A1-03/010105
- WO-A1-2019/086784
- WO-A2-2005/000578

## Description

L'invention concerne un matériau comprenant un substrat revêtu sur une face d'un empilement de couches minces à propriétés de réflexion dans l'infrarouge et/ou dans le rayonnement solaire comportant plusieurs couches fonctionnelles métalliques, en particulier à base d'argent ou d'alliage métallique contenant de l'argent, et au moins deux revêtements antireflet, lesdits revêtements antireflet comportant chacun au moins une couche diélectrique, chaque couche fonctionnelle étant disposée entre deux revêtements antireflet.

Dans ce type d'empilement, chaque couche fonctionnelle métallique se trouve ainsi disposée entre deux revêtements antireflet comportant chacun au moins une couche qui sont chacune en un matériau diélectrique du type nitrure, et notamment nitrure de silicium ou d'aluminium, ou oxyde. Du point de vue optique, le but de ces revêtements qui encadrent les couches fonctionnelles métallique est « d'antirefléter » ces couches fonctionnelles métalliques.

Il est connu de la demande de brevet européen N° EP 847 965 une configuration antérieure dans laquelle le revêtement antireflet le plus éloigné de la face du substrat comporte une couche diélectrique de nitrure de silicium.

Ce document enseigne en particulier que le matériau comprenant cet empilement de couches minces et le substrat sur une face duquel il est situé peuvent subir un traitement thermique sollicitant, du type bombage, trempe ou recuit, qui conduit à une modification structurelle du substrat sans dégrader les propriétés optiques et thermiques de l'empilement.

L'invention repose sur la découverte d'une configuration particulière d'au moins une couche plus éloignée qu'une couche fonctionnelle métallique, qui permet d'obtenir une bonne résistance mécanique de l'empilement permettant le lavage en machine à laver avant traitement thermique et la conservation de cette bonne résistance mécanique au lavage en machine à laver au cas où le matériau subisse un traitement thermique du type bombage, trempe ou recuit avant le lavage en machine à laver.

Un but de l'invention est ainsi de parvenir à mettre au point un nouveau type d'empilement de couches à plusieurs couches fonctionnelles, empilement qui présente, après traitement thermique du matériau, une faible résistance par carré (et donc une faible émissivité), ainsi qu'une résistance mécanique élevée, en particulier à un test utilisant une brosse, lui permettant de subir un lavage par machine à laver sans traitement thermique, ou après un traitement thermique.

Le lavage en machine à laver est très important pour permettre de produire des vitrages à un coût raisonnable.

En outre, en améliorant la protection mécanique à l'intérieur d'un revêtement antireflet, il est ainsi possible de diminuer l'épaisseur ou les épaisseurs d'éventuels revêtement(s) de blocage protégeant une couche fonctionnelle métallique, dessous ou au-dessus, voire de ne pas prévoir un tel revêtement de blocage, et ainsi obtenir un substrat revêtu d'un empilement qui présente une transmission lumineuse plus élevée.

Dans la configuration particulière selon l'invention, il est proposé de disposer dans le revêtement antireflet situé au-dessus d'une couche fonctionnelle métallique en partant du substrat, une couche diélectrique de nitrure à base d'aluminium et de silicium.

Il a été découvert que cette configuration, lorsque la proportion atomique d'aluminium par rapport au total d'aluminium et de silicium comprise entre 91,0% et 55,0 %, voire entre 90,0 % et 60,0 %, permet de prévoir une couche diélectrique de nitrure qui présente une contrainte interne faible.

En outre, l'empilement de couches minces est moins onéreux : il coûte moins cher en particulier de déposer par pulvérisation réactive en continu une couche diélectrique de nitrure à base d'aluminium et de silicium AlₓSi_{y}N_{z} qu'une couche diélectrique en nitrure d'aluminium AlN car le taux de dépôt, en nanomètre pour une même vitesse de défilement du substrat, est plus élevé pour le nitrure à base d'aluminium et de silicium AlₓSi_{y}N_{z} qui présente une proportion atomique d'aluminium par rapport au total d'aluminium et de silicium comprise entre 91,0 % et 55,0 %, voire entre 90,0 % et 60,0 %.

Par ailleurs, la couche diélectrique de nitrure à base d'aluminium et de silicium AlₓSi_{y}N_{z} présentant une proportion atomique d'aluminium par rapport au total d'aluminium et de silicium comprise entre 91,0% et 55,0 %, voire entre 90,0 % et 60,0 % n'a pas d'influence néfaste, ni sur la résistance par carré de l'empilement, tant avant qu'après traitement thermique, ni sur les caractéristiques optiques du matériau, tant avant qu'après traitement thermique. Cette proportion atomique d'aluminium par rapport au total d'aluminium et de silicium peut être comprise entre 90,0 % et 70,0 % ou entre 85,0 % et 65,0 % ou entre 85,0 % et 70,0 %, voire entre 83,0 % et 60,0 % ou entre 83,0 % et 70,0 %.

L'invention a ainsi pour objet, dans son acception la plus large, un matériau selon la revendication 1. Ce matériau comprend un substrat, verrier, revêtu sur une face d'un empilement de couches minces à propriétés de réflexion dans l'infrarouge et/ou dans le rayonnement solaire comportant n couches fonctionnelles métalliques, n étant un nombre entier ≥ 2, en particulier n couches fonctionnelles métalliques à base d'argent ou d'alliage métallique contenant de l'argent et n + 1 revêtements antireflet, lesdits revêtements antireflet comportant chacun au moins une couche diélectrique, chaque couche fonctionnelle étant disposée entre deux revêtements antireflet. Ce matériau est remarquable en ce que au moins un, voire plusieurs ou chaque, revêtement antireflet situé plus loin de ladite face qu'une couche fonctionnelle comporte une couche diélectrique de nitrure à base d'aluminium et de silicium AlₓSi_{y}N_{z} qui présente une proportion atomique d'aluminium par rapport au total d'aluminium et de silicium comprise entre 91,0 % et 55,0 %, voire entre 90,0 % et 60,0 %, ladite couche diélectrique de nitrure à base d'aluminium et de silicium AlₓSi_{y}N_{z} présentant une épaisseur physique qui est comprise entre 5,0 et 100,0 nm, voire entre 7,0 et 95,0 nm, voire entre 10,0 et 90,0 nm.

Ladite couche à base d'aluminium et de silicium AlₓSi_{y}N_{z} est une couche barrière qui empêche la pénétration d'éléments provenant de l'extérieur en direction de la couche fonctionnelle métallique située plus vers la face du substrat. Elle est, de préférence au moins dans le revêtement antireflet le plus éloigné de ladite face du substrat.

Ledit empilement peut comporter deux couches fonctionnelles métalliques, ou trois couches fonctionnelles métalliques, ou quatre couches fonctionnelles métalliques ; les couches fonctionnelles métalliques dont il s'agit ici sont des couches continues.

Au moins une couche fonctionnelle, et de préférence chaque couche fonctionnelle, est, de préférence, une couche continue.

Ladite couche fonctionnelle métallique située sous ladite couche à base d'aluminium et de silicium AlₓSi_{y}N_{z} en direction de la face du substrat, ou chaque fonctionnelle métallique, présente de préférence une épaisseur physique qui est comprise entre 8,0 et 22,0 nm, voire entre 9,0 et 16,4 nm, voire entre 9,5 et 12,4 nm.

Une couche fonctionnelle métallique comporte, de préférence, majoritairement, à au moins 50 % en ratio atomique, au moins un des métaux choisi dans la liste : Ag, Au, Cu, Pt ; une, plusieurs, ou chaque, couche fonctionnelle métallique est de préférence en argent.

Par « couche métallique » au sens de la présente invention, il faut comprendre que la couche est absorbante comme indiquée ci-avant et qu'elle ne comporte pas d'atome d'oxygène, ni d'atome d'azote.

Comme habituellement, par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Il est rappelé que n désigne l'indice de réfraction réel du matériau à une longueur d'onde donnée et le coefficient k représente la partie imaginaire de l'indice de réfraction à une longueur d'onde donnée ; le rapport n/k étant calculé à une longueur d'onde donnée identique pour n et pour k.

Par « au contact » on entend au sens de l'invention qu'aucune couche n'est interposée entre les deux couches considérées.

Par « à base de » on entend au sens de l'invention que pour la composition de cette couche, les éléments réactifs oxygène, ou azote, ou les deux s'ils sont présents tous les deux, ne sont pas considérés et l'élément non réactif ou les éléments réactif (par exemple le silicium ou le zinc ou encore l'aluminium et le silicium ensemble) qui est indiqué comme constituant la base, est présent à plus de 85 % atomique du total des éléments non réactifs dans la couche et peut la composition à 100 % d'élément(s) non réactif(s) de cette couche. Cette expression inclut ainsi ce qu'il est courant de nommer dans la technique considérée du « dopage », alors que l'élément dopant, ou chaque élément dopant, peut être présent en quantité allant jusqu'à 9,0 % atomique, mais sans atteindre ce taux de 9,0 % atomique.

Ledit revêtement antireflet comportant ladite couche diélectrique de nitrure à base d'aluminium et de silicium AlₓSi_{y}N_{z} peut comporter au moins une couche diélectrique supérieure, appelée « supérieure » car appartenant au revêtement antireflet situé plus loin que la première couche fonctionnelle et étant en un matériau différent de ladite couche diélectrique de nitrure à base d'aluminium et de silicium AlₓSi_{y}N_{z}. Cette couche diélectrique supérieure est une couche de nitrure et/ou d'oxyde. Elle peut être située plus loin de ladite face du substrat que ladite couche diélectrique de nitrure à base d'aluminium et de silicium AlₓSi_{y}N_{z}. Ladite couche diélectrique supérieure de nitrure et/ou d'oxyde est de préférence au contact, au-dessus de ladite couche diélectrique de nitrure à base d'aluminium et de silicium AlₓSi_{y}N_{z}.

Ladite couche diélectrique supérieure de nitrure et/ou d'oxyde présente, de préférence, une épaisseur comprise entre 5,0 et 75,0 nm, voire entre 7,0 et 70,0 nm, voire entre 10,0 et 65,0 nm. Elle peut présenter une épaisseur en particulier entre 5,0 et 30,0 nm, ou encore entre 7,0 et 30 nm, ou même entre 10,0 et 30,0 nm
Ladite couche diélectrique supérieure peut être une couche diélectrique de nitrure à base de silicium Si_{y'}N_{z'}, qui présente une vitesse de dépôt proche de celle de ladite couche diélectrique de nitrure à base d'aluminium et de silicium AlₓSi_{y}N_{z}, et notamment peut être une couche en nitrure de silicium Si₃N₄.

Ladite couche diélectrique supérieure peut éventuellement être une couche diélectrique supérieure de nitrure à base de silicium-zirconium Si_{y''}N_{z''}Zr_{w} ; elle présente alors, de préférence, un rapport atomique de silicium sur zirconium, y/w, compris entre 2,2 et 5,6, voire entre 2,9 et 5,6, voire entre 3,0 et 4,8 ; ainsi, son indice est légèrement plus élevé, de l'ordre de 0, 2 à 0,5, de celui d'une diélectrique supérieure de nitrure à base de silicium Si₃N₄ ; de préférence en outre, ladite couche diélectrique supérieure de nitrure à base de silicium-zirconium Si_{y"}N_{z"}Zr_{w} ne comporte pas d'oxygène.

Ladite couche diélectrique supérieure peut être une couche diélectrique d'oxyde, de préférence d'oxyde à base de zinc et d'étain, SnᵢZnⱼO, qui présente une vitesse de dépôt proche de celle de ladite couche diélectrique de nitrure à base d'aluminium et de silicium AlₓSi_{y}N_{z}.

Ledit revêtement antireflet comportant ladite couche diélectrique de nitrure à base d'aluminium et de silicium AlₓSi_{y}N_{z} peut comporter, au-dessus de cette couche diélectrique de nitrure à base d'aluminium et de silicium AlₓSi_{y}N_{z} une succession de couches, notamment au contact l'une de l'autre, du type : couche diélectrique supérieure d'oxyde à base de zinc et d'étain / couche diélectrique supérieure de nitrure à base de silicium-zirconium Si_{y"}N_{z"}Zr_{w}.

Ledit revêtement antireflet comportant ladite couche diélectrique de nitrure à base d'aluminium et de silicium AlₓSi_{y}N_{z} peut comporter au moins une seconde couche diélectrique de nitrure à base d'aluminium et de silicium AlₓSi_{y}N_{z}. Cette seconde couche diélectrique de nitrure à base d'aluminium et de silicium AlₓSi_{y}N_{z} peut être de composition identique ou différente d'une première couche diélectrique de nitrure à base d'aluminium et de silicium AlₓSi_{y}N_{z}.

Il est possible que plusieurs, voire chaque, revêtement antireflet situé plus loin de ladite face qu'une couche fonctionnelle comporte plusieurs couches diélectriques de nitrure à base d'aluminium et de silicium AlₓSi_{y}N_{z}.

Ladite, ou chaque, seconde couche diélectrique de nitrure à base d'aluminium et de silicium AlₓSi_{y}N_{z} présente de préférence une épaisseur physique qui est comprise entre 5,0 et 100,0 nm, voire entre 7,0 et 95,0 nm, voire entre 10,0 et 90,0 nm. Elle peut être en particulier entre 5,0 et 30,0 nm, ou encore entre 7,0 et 30 nm, ou même entre 10,0 et 30,0 nm.

De préférence, ladite couche diélectrique, ou lesdites couches diélectriques, de nitrure à base d'aluminium et de silicium AlₓSi_{y}N_{z} ne comporte(nt) pas d'oxygène.

De préférence, un revêtement antireflet situé entre ladite face et une couche fonctionnelle métallique qui est la plus proche de ladite face ne comporte pas de couche diélectrique de nitrure à base d'aluminium et de silicium AlₓSi_{y}N_{z} qui présente une proportion atomique d'aluminium par rapport au total d'aluminium et de silicium comprise entre 91,0 % et 55,0 %, voire entre 90,0 % et 60,0 %, afin de ne pas avoir de couche avec une faible contrainte interne dans ce revêtement antireflet.

Dans une variante particulière, ledit revêtement antireflet comportant ladite couche diélectrique de nitrure à base d'aluminium et de silicium AlₓSi_{y}N_{z} est situé entre deux couches fonctionnelles.

De préférence, ledit empilement de couches minces comporte une couche de protection, finale, la plus loin de ladite face, présentant une épaisseur comprise entre 0,5 et 4,5 nm.

La présente invention se rapporte par ailleurs à un vitrage multiple comportant un matériau selon l'invention, et au moins un autre substrat, les substrats étant maintenus ensemble par une structure de châssis, ledit vitrage réalisant une séparation entre un espace extérieur et un espace intérieur, dans lequel au moins une lame de gaz intercalaire est disposée entre les deux substrats.

Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Un substrat du vitrage, notamment le substrat porteur de l'empilement peut être bombé et/ou trempé après le dépôt de l'empilement. Il est préférable dans une configuration de vitrage multiple que l'empilement soit disposé de manière à être tourné du côté de la lame de gaz intercalaire.

Le vitrage peut aussi être un triple vitrage constitué de trois feuilles de verre séparées deux par deux par une lame de gaz. Dans une structure en triple vitrage, le substrat porteur de l'empilement peut être en face 2 et/ou en face 5, lorsque l'on considère que le sens incident de la lumière solaire traverse les faces dans l'ordre croissant de leur numéro.

Un vitrage selon l'invention peut aussi être un vitrage feuilleté comportant un matériau selon l'invention, au moins un autre substrat et au moins une feuille intercalaire de matière plastique située entre lesdits substrats.

Les détails et caractéristiques avantageuses de l'invention ressortent des exemples non limitatifs suivants, illustrés à l'aide des figures ci-jointes :
- [Fig. 1] illustre une première structure d'un empilement monocouche fonctionnelle ;
- [Fig. 2] illustre une seconde structure d'un empilement bicouche fonctionnelle ;
- [Fig. 3] illustre un double vitrage incorporant un empilement selon l'invention ;
- [Fig. 4] illustre un triple vitrage incorporant deux empilements ;
- [Fig. 5] illustre un vitrage feuilleté incorporant un empilement selon l'invention ;
- [Fig. 6] illustre un tableau récapitulatif d'exemples monocouche fonctionnelle dont certains comporte une couche diélectrique de nitrure à base d'aluminium et de silicium AlₓSi_{y}N_{z} présentant une proportion atomique de Al/(Al + Si) de 90 % ;
- [Fig. 7] illustre un tableau récapitulatif d'exemples monocouche fonctionnelle dont certains comporte une couche diélectrique de nitrure à base d'aluminium et de silicium AlₓSi_{y}N_{z} présentant une proportion atomique de Al/(Al + Si) de 70 % ;
- [Fig. 8] illustre un tableau récapitulatif d'exemples bicouche fonctionnelle dont certains comporte une (ou plusieurs) couche(s) diélectrique(s) de nitrure à base d'aluminium et de silicium AlₓSi_{y}N_{z} présentant une proportion atomique de Al/(Al + Si) de 80 % ; et
- [Fig. 9] illustre un tableau récapitulatif des conditions de dépôt des couches des exemples.

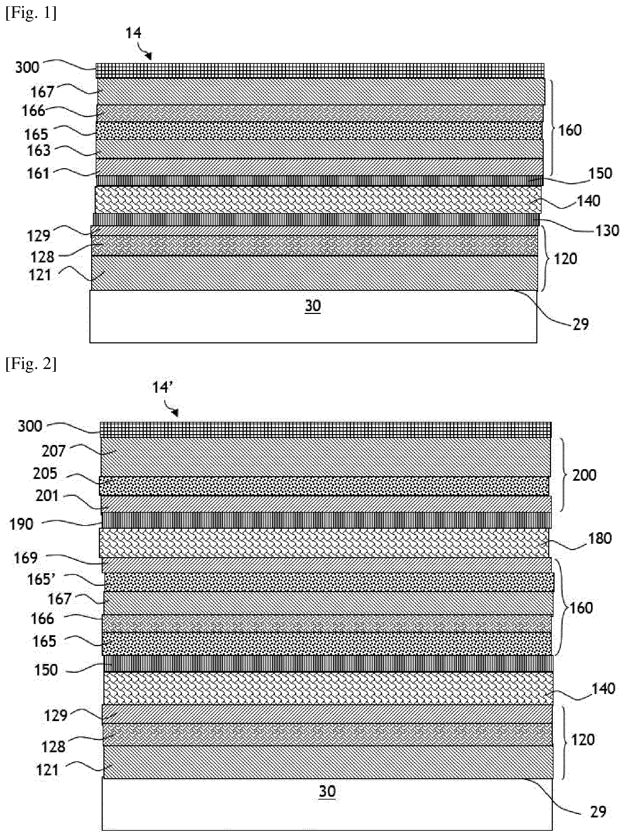

Dans les figures 1 à 5, les proportions entre les épaisseurs des différentes couches ou des différents éléments ne sont pas rigoureusement respectées afin de faciliter leur lecture.

La [Fig. 1] illustre une première structure d'un empilement 14 monocouche fonctionnelle déposé sur une face 29 d'un substrat 30 verrier, transparent, dans laquelle la couche fonctionnelle 140 unique, en particulier à base d'argent ou d'alliage métallique contenant de l'argent, est disposée entre deux revêtements antireflet, le revêtement antireflet 120 sous-jacent situé en dessous de la couche fonctionnelle 140 en direction du substrat 30 et le revêtement antireflet 160 sus-jacent disposé au-dessus de la couche fonctionnelle 140 à l'opposé du substrat 30. Ces deux revêtements antireflet 120, 160, comportent chacun au moins une couche diélectrique 121, 128, 129 ; 161, 163, 165, 166, 167.

En [Fig. 1], le revêtement antireflet 120 situé sous la couche fonctionnelle 140 en direction de la face 29 comporte :
- une sous-couche d'oxyde à base de zinc, ZnO 129 qui est située sous et au contact de la couche fonctionnelle 140 ; et
- une sous-couche diélectrique d'oxyde mixte à base de zinc et d'étain SnᵢZnⱼO 128 qui est située sous et au contact de la sous-couche d'oxyde à base de zinc ZnO 129, ; et
- une sous-couche diélectrique de nitrure à base de silicium Si_{x'}N_{y'} 121 qui est située sous et au contact de la sous-couche diélectrique d'oxyde mixte à base de zinc et d'étain SnᵢZnⱼO 128.

En [Fig. 1], le revêtement antireflet 160 situé au-dessus la couche fonctionnelle 140 à l'opposé du substrat 30 comporte deux, trois ou quatre couches diélectriques :
- une couche d'oxyde à base de zinc, ZnO 161 ;
- une couche diélectrique de nitrure à base de silicium Si_{x'}N_{y'} 163, 167 ;
- une couche diélectrique d'oxyde à base de zinc et d'étain SnᵢZnⱼO 166 ;
- une couche diélectrique de nitrure à base d'aluminium et de silicium AlₓSi_{y}N_{z} 165, qui présente une épaisseur physique qui est comprise entre 5,0 et 100,0 nm, voire entre 10,0 et 90,0 nm.

En [Fig. 1], la couche fonctionnelle 140 est située indirectement sur le revêtement antireflet 120 sous-jacent et indirectement sous le revêtement antireflet 160 sus-jacent : il y a un de revêtement de sous-blocage 130 situé entre le revêtement antireflet 120 sous-jacent et la couche fonctionnelle 140 et un revêtement de sur-blocage 150 situé entre la couche fonctionnelle 140 et le revêtement antireflet 160. Toutefois, un tel revêtement de sous-blocage et/ou un tel revêtement de sur-blocage peut ne pas être présent.

La [Fig. 2] illustre une structure d'un empilement 14' bicouche fonctionnelle selon l'invention déposé sur une face 29 d'un substrat 30 verrier, transparent, dans laquelle les deux couches fonctionnelles 140, 180, en particulier à base d'argent ou d'alliage métallique contenant de l'argent, sont disposées, chacune, entre deux revêtements antireflet : le revêtement antireflet 120 sous-jacent est situé en dessous de la couche fonctionnelle 140 la plus proche de la face 29 du substrat 30, le revêtement antireflet 160 intermédiaire est située entre les deux couches fonctionnelles et le revêtement antireflet 200 sus-jacent est située au-dessus de la couche fonctionnelle 180 la plus éloignée de la face 29 du substrat 30. Ces trois revêtements antireflet 120, 160, 200 comportent chacun au moins une couche diélectrique 121, 128, 129 ; 165, 166, 167, 165' ; 201, 205, 207.

En [Fig. 2] :
- la couche fonctionnelle 140 la plus proche du substrat est située directement sur le revêtement antireflet 120 sous-jacent et indirectement sous le revêtement antireflet 160 sus-jacent : il y a un revêtement de sur-blocage 150 situé entre la couche fonctionnelle 140 et le revêtement antireflet 160 ; Il n'y a pas de revêtement de sous-blocage située entre le revêtement antireflet 120 sous-jacent et la couche fonctionnelle 140 ;
- la couche fonctionnelle 180 la plus éloignée du substrat : la couche fonctionnelle 180 est au contact direct du revêtement antireflet 160 situé directement dessous et indirectement sous le revêtement antireflet 200 situé au-dessus : il y a un revêtement de sur-blocage 190 situé entre la couche fonctionnelle 180 et le revêtement antireflet 200 ; Il n'y a pas de revêtement de sous-blocage situé entre le revêtement antireflet 160 sous-jacent et la couche fonctionnelle 180.

Toutefois, il pourrait être envisagé qu'un revêtement de sous-blocage soit en outre situé sous une, ou chaque, couche fonctionnelle 140, 180, ou qu'il y ait un, ou plusieurs, revêtement(s) de sous-blocage et un, ou aucun, revêtement de sur-blocage, ou encore qu'il n'y ait aucun revêtement de sous-blocage, ni de sur-blocage.

En [Fig. 2], le revêtement antireflet 120 situé sous la couche fonctionnelle 140 en direction du substrat 30 comporte :
- une sous-couche d'oxyde à base de zinc, ZnO 129 qui est située sous et au contact de la couche fonctionnelle 140 ; et
- une sous-couche diélectrique d'oxyde mixte à base de zinc et d'étain SnᵢZnⱼO 128 qui est située sous et au contact de la sous-couche d'oxyde à base de zinc ZnO 129, ; et
- une sous-couche diélectrique de nitrure à base de silicium Si_{x'}N_{y'} 121 et qui est située sous et au contact de la sous-couche diélectrique d'oxyde mixte à base de zinc et d'étain SnᵢZnⱼO 128.

Le revêtement antireflet situé sous la seconde couche fonctionnelle 180, comporte, en direction dudit substrat deux, trois ou quatre couches diélectriques 165, 166, 167, 165', 169 :
- une couche diélectrique de nitrure à base d'aluminium et de silicium AlₓSi_{y}N_{z} 165, 165', qui présente une épaisseur physique qui est comprise entre 5,0 et 100,0 nm, voire entre 10,0 et 90,0 nm,
- une couche diélectrique de nitrure à base de silicium Si_{x'}N_{y'} 167,
- une couche diélectrique d'oxyde mixte à base de zinc et d'étain SnᵢZnⱼO 166, qui présente une épaisseur physique qui est comprise entre 3,0 et 50,0 nm, voire entre 4,0 et 40,0 nm, voire entre 5,0 et 35,0 nm,
- une sous-couche d'oxyde à base de zinc, ZnO 169 qui est située sous et au contact de la couche fonctionnelle 180.

En [Fig. 2], le revêtement antireflet 200 situé au-dessus la couche fonctionnelle 180 la plus éloignée de la face 29 comporte deux ou trois couches diélectriques 201, 205, 207 :
- une couche d'oxyde à base de zinc, ZnO 201 ;
- une couche diélectrique de nitrure à base d'aluminium et de silicium AlₓSi_{y}N_{z} 165, qui présente une épaisseur physique qui est comprise entre 5,0 et 100,0 nm, voire entre 10,0 et 90,0 nm ;
- une couche diélectrique de nitrure à base de silicium Si_{x'}N_{y'} 207.

Le revêtement antireflet 160 situé au-dessus de l'unique couche fonctionnelle métallique en [Fig. 1], ou le revêtement antireflet 200 qui est situé au-dessus de la couche fonctionnelle métallique la plus éloignée de la face 29 lorsqu'il y en a plusieurs couches fonctionnelles métalliques, peut être recouvert par une couche de protection terminale 300, appelée « overcoat » en anglais, qui est alors la couche de l'empilement qui est la plus éloignée de la face 29. Il peut s'agir par exemple d'une couche à base d'oxyde de titane ou en oxyde de titane.

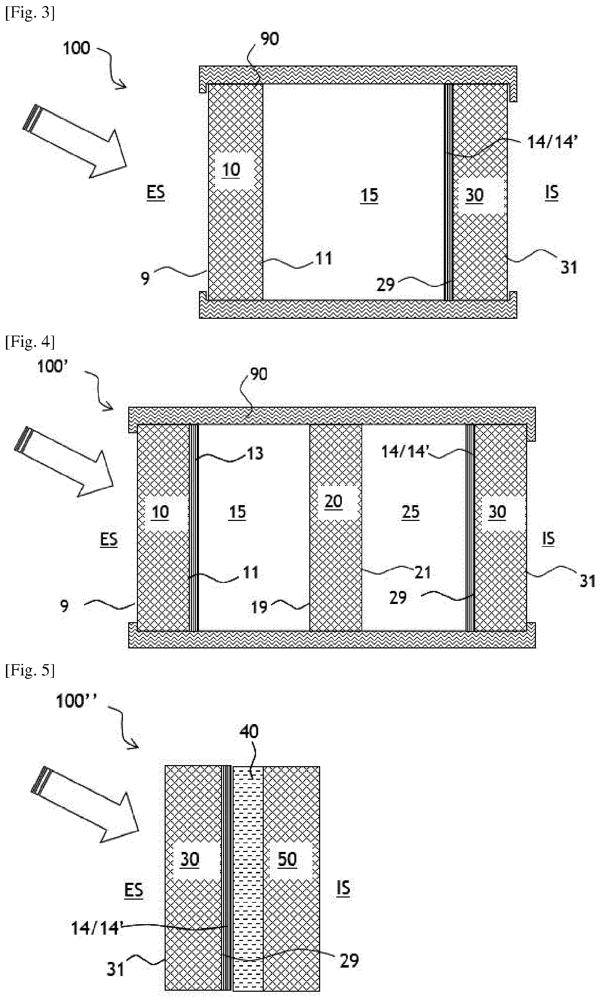

Un tel empilement de couches minces 14, 14' peut être utilisé dans un vitrage multiple ou dans un vitrage feuilleté 100", réalisant une séparation entre un espace extérieur ES et un espace intérieur IS ; ce vitrage peut présenter une structure :
- de double vitrage 100, comme illustré en [Fig. 3] : ce vitrage est alors constitué de deux substrats 10, 30 qui sont maintenus ensemble par une structure de châssis 90 et qui sont séparés l'un de l'autre par une lame de gaz intercalaire 15 ; ou
- de triple vitrage 100', comme illustré en [Fig. 4] : ce vitrage est alors constitué de trois substrats 10, 20, 30, séparée deux par deux par une lame de gaz intermédiaire 15, 25, le tout étant maintenu ensemble par une structure de châssis 90 ; ou
- de vitrage feuilleté 100", comme illustré en [Fig. 5] : ce vitrage comporte le substrat 30 qui réalise un substrat extérieur, un substrat 50 qui réalise un substrat intérieur, ainsi qu'une feuille intercalaire de matière plastique 40 disposée entre ces deux substrats, au contact.

Dans ces figures, le sens incident de la lumière solaire entrant dans le bâtiment est illustré par la double flèche, à gauche.

Il peut aussi être envisagé que dans une structure de double vitrage ou de triple vitrage, l'un des substrats présente une structure feuilletée.

En [Fig. 3], l'empilement 14, 14' de couches minces peut être positionné en face 3 (sur la feuille la plus à l'intérieur du bâtiment en considérant le sens incident de la lumière solaire entrant dans le bâtiment et sur sa face tournée vers la lame de gaz), c'est-à-dire sur une face intérieure 29 du substrat 30 en contact avec la lame de gaz intercalaire 15, l'autre face 31 du substrat 30 étant en contact avec l'espace intérieur IS. Toutefois, l'empilement 14 de couches minces peut être positionné en face 2, sur la feuille la plus à l'extérieur du bâtiment en considérant le sens incident de la lumière solaire entrant dans le bâtiment et sur sa face tournée vers la lame de gaz (non illustré).

En [Fig. 4], il y a deux empilements de couches minces, de préférence identiques :
- un empilement 13 de couches minces est positionné en face 2 (sur la feuille la plus à l'extérieur du bâtiment en considérant le sens incident de la lumière solaire entrant dans le bâtiment et sur sa face tournée vers la lame de gaz), c'est-à-dire sur une face intérieure 11 du substrat 10 en contact avec la lame de gaz intercalaire 15, l'autre face 9 du substrat 10 étant en contact avec l'espace extérieur ES ;
- et un empilement 14, 14' de couches minces est positionné en face 5 (sur la feuille la plus à l'intérieur du bâtiment en considérant le sens incident de la lumière solaire entrant dans le bâtiment et sur sa face tournée vers la lame de gaz), c'est-à-dire sur une face intérieure 29 du substrat 30 en contact avec la lame de gaz intercalaire 25, l'autre face 31 du substrat 30 étant en contact avec l'espace intérieur IS.

En [Fig. 5], l'empilement de couches minces 14, 14' est situé sur une face intérieure du substrat extérieur, mais il peut aussi être situé sur une face intérieure du substrat intérieur.

La feuille intercalaire de matière plastique 40 peut être, par exemple, du polyuréthane souple, un thermoplastique sans plastifiant tel que le copolymère éthylène/acétate de vinyle (EVA) ou du polybutyral de vinyle (PVB). La feuille intercalaire de matière plastique 40 présente, par exemple, une épaisseur comprise entre 0,2 mm et 1,1 mm, voire entre 0,38 mm et 0,76 mm. Le substrat extérieur présente une face 31 qui est tournée vers l'espace extérieur ES et une face 29 orientée vers l'espace intérieur IS.

La feuille intercalaire de matière plastique 40 permet de lier le substrat extérieur au substrat intérieur. Un vitrage est dit « feuilleté » dans le sens où il n'y a pas d'espace gazeux ou d'espace vide entre les au moins trois feuilles qui le constituent dans la direction transversale extérieur - intérieur. Bien que cela ne soit pas illustré, le vitrage peut en particulier comporter deux feuilles intercalaires de matière plastique.

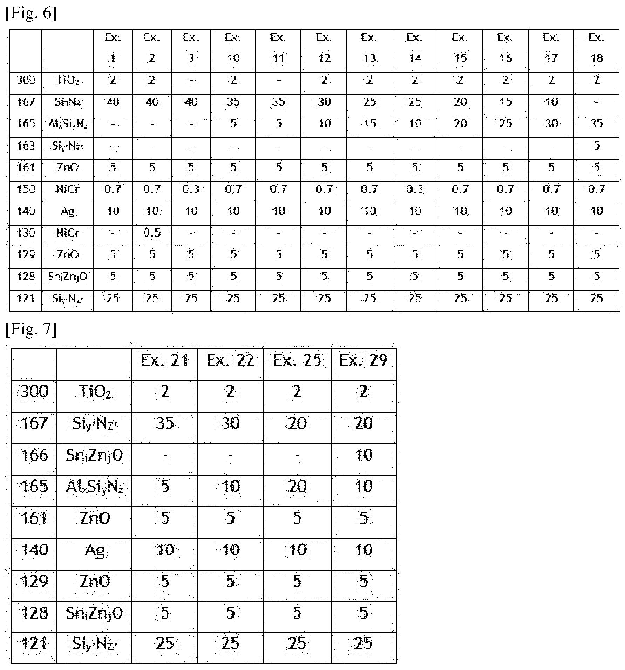

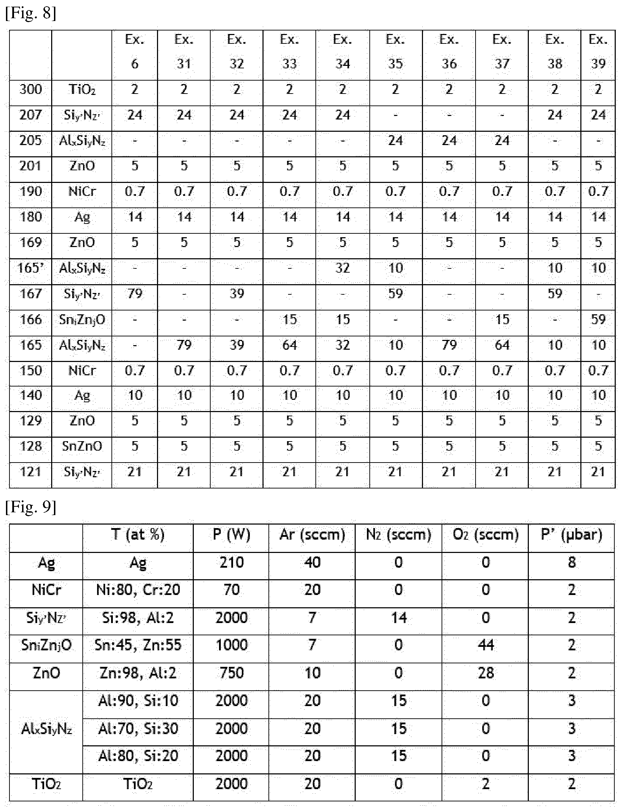

Trois série d'exemples ont été réalisées :
- une première série, récapitulée dans le tableau de la [Fig. 6], a été réalisée sur la base de la structure d'empilement monocouche fonctionnelle illustrée en [Fig. 1] ;
- une seconde série, récapitulée dans le tableau de la [Fig. 7], a été réalisée sur la base de la structure d'empilement monocouche fonctionnelle illustrée en [Fig. 1] ;
- une troisième série, récapitulée dans le tableau de la [Fig. 8], a été réalisée sur la base de la structure d'empilement bicouche fonctionnelle illustrée en [Fig. 2].

Pour chacun de ces tableaux, les exemples sont numérotés en première ligne et la première colonne du tableau indique la référence de la couche en lien avec la [Fig. 1] ou la [Fig. 2], respectivement. La deuxième colonne indique la composition de la couche et les valeurs indiquées sont les épaisseurs, en nanomètre. Un tiret indique que la couche n'est pas présente pour cet exemple.

Le tableau de la [Fig. 9] récapitule les conditions de dépôts des couches de ces exemples (les compositions des couches sont indiquées dans la première colonne, en référence aux deuxièmes colonnes des tableaux des [Fig. 6, 7, 8]), avec :
- pour les couches diélectriques de nitrure à base de silicium Si_{x'}N_{y'} 121, 163, 167, 207 : du Si₃N₄,
- pour la première ligne de nitrure à base d'aluminium et de silicium AlₓSi_{y}N_{z} : les conditions de dépôt de la couche diélectrique de nitrure à base d'aluminium et de silicium AlₓSi_{y}N_{z} 165 pour la première série d'exemple, celle de la [Fig. 6],
- pour la seconde ligne de nitrure à base d'aluminium et de silicium AlₓSi_{y}N_{z} : les conditions de dépôt de la couche diélectrique de nitrure à base d'aluminium et de silicium AlₓSi_{y}N_{z} 165 pour la seconde série d'exemple, celle de la [Fig. 7],
- pour la troisième ligne de nitrure à base d'aluminium et de silicium AlₓSi_{y}N_{z} : les conditions de dépôt de la couche diélectrique de nitrure à base d'aluminium et de silicium AlₓSi_{y}N_{z} 165, 165' et 205 pour la troisième série d'exemple, celle de la [Fig. 8].

Dans ce tableau de la [Fig. 9] :
- T est la composition de la cible, en pourcentage atomique,
- P est la puissance électrique, en Watts, appliquée à la cible,
- Ar (sccm) est le flux d'argon ajouté dans la chambre de dépôt du matériau,
- N₂ (sccm) est le flux d'azote ajouté dans la chambre de dépôt du matériau,
- O₂ (sccm) est le flux d'oxygène ajouté dans la chambre de dépôt du matériau, et
- P' est la pression dans la chambre de dépôt du matériau, en µbar.

Les empilements des exemples présentés dans les tableaux ont été déposés sur un substrat transparent, en verre, et la tenue mécanique des matériaux ainsi obtenus a fait l'objets d'un test de résistance mécanique appelé « Test Erichsen à la Brosse » ou « EBT » pour « Erichsen Brush Test » en anglais.

Ce test consiste à déposer un échantillon dans un bain d'eau froide et frotter, à l'aide d'une machine, la surface de l'échantillon avec une brosse à poils en matériau polymère, en un mouvement de va-et-vient (1 va-et-vient = 1 passage). Trois cycles de brossage sont appliqués, sur trois parties différente, correspondant à un nombre de passages, de la brosse : 50 passages, 100 passages et 300 passages.

En outre, trois autres échantillons du même matériau ont subi un traitement thermique afin de simuler une trempe dans les conditions usuelles dans le domaine, puis, seulement après ce traitement thermique, le test EBT : les échantillons sont alors soumis à un traitement thermique pendant environ 10 minutes à une température d'environ 650 °C suivi d'un refroidissement à l'air ambiant (environ 20 °C) puis au test EBT.

Le test EBT avant trempe donne une bonne indication sur l'aptitude du vitrage à être rayé lors d'une opération de lavage en machine à laver. Le test EBT après traitement thermique donne une bonne indication sur l'aptitude du vitrage à être rayé lors d'une opération de lavage en machine à laver après trempe. L'opération de lavage en machine à laver est une opération qui permet de gagner du temps et de l'efficacité lors de la mise en œuvre des substrats revêtus d'un empilement pour fabriquer des fenêtres : elle est plus rapide et plus efficace que le lavage manuel par un opérateur.

Pour chacun des six échantillons de chaque matériau, l'évaluation du test est opérée à l'œil nu, par un opérateur expérimenté, qui classe chaque échantillon dans l'un des trois catégories suivantes :
- aucune rayure,
- quelques rayures fines et non continues,
- nombreuses rayures fines, non continues ou continues.

Pour la première série d'exemples, les ex. 1 à 3 ont réussi le test EBT avant traitement thermique : il n'y avait aucune rayure avant traitement thermique (même pour l'ex. 3, sans couche de protection 300), ni pour 50 passages, ni pour 300 passages.

Parmi les ex. 1, 2 et 3, seul l'ex. 2 a réussi le test EBT après traitement thermique : pour le test EBT après traitement thermique des ex. 1 et 3, de nombreuses rayures fines, non continues ou continues ont été observées, tant pour 50 passages, que pour 100 passages et pour 300 passages.

Pour les ex. 1 et 2 , la couche de protection 300 confère une protection mécanique « à sec », c'est-à-dire pour la manipulation des substrats revêtus des empilements, mais ne confère pas une protection efficace vis-à-vis du lavage en machine.

Les exemples 10 à 18 ont tous réussi le test EBT avant traitement thermique et le test EBT après traitement thermique : pour chacun de ces exemples il n'y avait aucune rayure avant traitement thermique, ni pour 50 passages, ni pour 300 passages et il n'y avait aucune rayure après traitement thermique, ni pour 50 passages, ni pour 100 passages, ni pour 300 passages. Les empilements de tous ces exemples, (même l'ex. 11, sans couche de protection 300), sont correctement protégés vis-à-vis du lavage en machine.

L'ex. 1 présente avant traitement thermique une résistance par carré de 5,7 ohms/ carré et une transmission lumineuse de 85,8 %. Il présente après traitement thermique une résistance par carré de 4,3 ohms/ carré et une transmission lumineuse de 88,0 %.

L'ex. 2 présente avant traitement thermique une résistance par carré plus élevée, de 6,5 ohms/ carré et une transmission lumineuse plus basse, de 83,8 %. Il présente après traitement thermique une résistance par carré plus élevée que celle de l'ex. 1, de 4,8 ohms/ carré et une transmission lumineuse plus basse, de 87,1 %.

L'ex. 3 présente avant traitement thermique une résistance par carré quasi-identique à celle de l'exemple 1, de 5,5 ohms/ carré et une transmission lumineuse plus élevée que celle de l'exemple 1, de 86,8 % en raison d'un revêtement de sur-blocage plus fin. Il présente après traitement thermique une résistance par carré quasi-identique à celle de l'ex. 1, de 4,1 ohms/ carré et une transmission lumineuse plus élevée que celle de l'exemple 1, de 88,9 %.

L'ex. 12 présente avant traitement thermique une résistance par carré quasi-identique à celle de l'exemple 1, de 5,4 ohms/ carré et une transmission lumineuse quasi-identique de 86,0 %. Il présente après traitement thermique une résistance par carré amélioré (plus basse) de 4,2 ohms/ carré et une transmission lumineuse quasi-identique de 88,1 %.

L'ex. 14, avec un revêtement de sur-blocage plus fin que celui de l'ex. 12, présente avant traitement thermique une résistance par carré quasi-identique, de 5,3 ohms/ carré et une transmission lumineuse quasi-identique de 86,9 %. Il présente après traitement thermique une résistance par carré amélioré (plus basse) de 4,0 ohms/ carré et une transmission lumineuse plus élevée de 89,0 %.

Ainsi, la présence de la couche diélectrique de nitrure à base d'aluminium et de silicium AlₓSi_{y}N_{z} 165, à une épaisseur physique de 5,0 nm ou plus, grâce à la meilleure protection mécanique qu'elle confère, permet de prévoir un revêtement de sur-blocage 150 moins épais, et permet ainsi d'obtenir une transmission lumineuse plus élevée.

Pour la seconde série d'exemples, les exemples 21, 22, 25 et 29 ont tous réussi le test EBT avant traitement thermique et le test EBT après traitement thermique : pour chacun de ces exemples il n'y avait aucune rayure avant traitement thermique, ni pour 50 passages, ni pour 300 passages et il n'y avait aucune rayure après traitement thermique, ni pour 50 passages, ni pour 100 passages, ni pour 300 passages. Les empilements de ces exemples, sont correctement protégés vis-à-vis du lavage en machine.

Il a ainsi été constaté avec surprise qu'une couche diélectrique de nitrure à base d'aluminium et de silicium AlₓSi_{y}N_{z} 165 présentant une épaisseur physique qui est comprise entre 5,0 et 100,0 nm, voire entre 7,0 et 95,0 nm, voire entre 10,0 et 90,0 nm, présentant une proportion atomique d'aluminium par rapport au total d'aluminium et de silicium comprise entre 91,0 % et 65,0 %, voire entre 90,0 % et 70,0 % et située dans le revêtement antireflet 160 situé plus loin de la face 29 que la couche fonctionnelle 140 favorise la résistance mécanique après traitement thermique et confère une protection efficace vis-à-vis du lavage en machine lorsque une couche diélectrique supérieure de nitrure et/ou d'oxyde est située au-dessus, plus loin de la face 29 que la couche diélectrique de nitrure à base d'aluminium et de silicium AlₓSi_{y}N_{z} 165.

Cet effet est obtenu en particulier avec la couche diélectrique supérieure de nitrure lorsqu'elle est une couche diélectrique supérieure de nitrure à base de silicium Si_{y'}N_{z'} 167 et lorsque la couche diélectrique supérieure est un oxyde à base de zinc et d'étain SnᵢZnⱼO 166.

Une épaisseur physique de couche diélectrique de nitrure à base d'aluminium et de silicium AlₓSi_{y}N_{z} 165 qui est comprise entre 5,0 et 30,0 nm donne en particulier de très bon résultats de résistance mécanique après traitement thermique pour les empilements à une seule couche fonctionnelle métallique 140.

Une troisième série d'exemples a été réalisée sur la base de la structure d'empilement illustrée en [Fig. 2].

L'ex. 6 a réussi le test EBT avant traitement thermique, mais pas le test EBT après traitement thermique : il n'y avait aucune rayure avant traitement thermique, ni pour 50 passages, ni pour 300 passages mais pour le test EBT après traitement thermique, de nombreuses rayures fines, non continues ou continues ont été observées, tant pour 50 passages, que pour 100 passages et pour 300 passages. L'ex. 6, n'est pas apte au lavage en machine après traitement thermique.

Les exemples 31 à 39 ont tous réussi le test EBT avant traitement thermique et le test EBT après traitement thermique : pour chacun de ces exemples il n'y avait aucune rayure avant traitement thermique, ni pour 50 passages, ni pour 300 passages et il n'y avait aucune rayure après traitement thermique, ni pour 50 passages, ni pour 100 passages, ni pour 300 passages. Les empilements de tous ces exemples, sont correctement protégés vis-à-vis du lavage en machine.

Il a ainsi été constaté avec surprise qu'une couche diélectrique de nitrure à base d'aluminium et de silicium AlₓSi_{y}N_{z} 165, 205 présentant une épaisseur physique qui est comprise entre 5,0 et 100,0 nm, voire entre 10,0 et 90,0 nm, présentant une proportion atomique d'aluminium par rapport au total d'aluminium et de silicium comprise entre 91,0 % et 65,0 %, voire entre 90,0 % et 70,0 % et située dans le revêtement antireflet 160 et/ou 200 situé plus loin de la face 29 que la couche fonctionnelle 140 ou 180 favorise la résistance mécanique après traitement thermique.

Cet effet est notamment obtenu lorsqu'une couche diélectrique supérieure de nitrure et/ou d'oxyde est située au-dessus, plus loin de la face 29 que la couche diélectrique de nitrure à base d'aluminium et de silicium AlₓSi_{y}N_{z} 165, 205. Cet effet est obtenu en particulier avec la couche diélectrique supérieure de nitrure lorsqu'elle est une couche diélectrique supérieure de nitrure à base de silicium Si_{y'}N_{z'} 167, 207.

Une épaisseur physique de couche diélectrique de nitrure à base d'aluminium et de silicium AlₓSi_{y}N_{z} 165 qui est comprise entre 5,0 et 30,0 nm donne en particulier de très bon résultats de résistance mécanique après traitement thermique pour les empilements à deux couches fonctionnelles métallique 140, 180, ou pour les empilements à plus que deux couches fonctionnelles métalliques 140, 180.

Certains exemples ont fait l'objet d'un lavage en machine à laver, puis un montage en vitrage feuilleté 100" (avec une étape de traitement thermique de feuilletage) et ont ensuite subi un test d'adhésion mécanique connu sous le nom de test Pummel, consistant à évaluer l'adhésion entre le PVB et chacun des substrats (sachant que la présence des couches à l'interface substrat/PVB peut la modifier de façon négative).

Une machine à test Pummel est décrite dans le brevet US 5543924.

Le test Pummel consiste à disposer les vitrages feuilletés incorporant un substrat revêtu d'un empilement de couches minces dans une enceinte réfrigérée à -20°C pendant quatre heures, puis à prendre un marteau de 500 grammes à tête hémisphérique et à en frapper le verre dès sa sortie de l'enceinte réfrigérée, le verre étant posé sur un chevalet penché à 45° par rapport à l'horizontale et installé de façon à ce que le plan médian du verre fasse un angle de 5° avec le plan d'inclinaison du chevalet (le vitrage est posé sur le chevalet en le maintenant appuyé par sa base seulement contre le chevalet.) Le vitrage feuilleté est frappé avec le marteau selon une ligne parallèle à la base du vitrage. On estime ensuite l'adhésion par comparaison avec des spécimens, une fois que les vitrages feuilletés sont à nouveau à température ambiante. Le "score" des vitrages feuilletés est ensuite évalué :
- entre 0 et 1, on a un vitrage feuilleté sans adhésion verre/PVB,
- entre 2 et 3, l'adhésion est moyenne,
- entre 4 et 6, l'adhésion est bonne,
- au-delà de 6 elle est excellente.

Les ex. 31 et 38 ont été testé dans cette configuration feuilletée et ils ont tous obtenu un score entre 6 et 7.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Matériau comprenant un substrat (30), verrier, revêtu sur une face (29) d'un empilement de couches minces (14') à propriétés de réflexion dans l'infrarouge et/ou dans le rayonnement solaire comportant n couches fonctionnelles métalliques (140, 180), n étant un nombre entier ≥ 2, en particulier n couches fonctionnelles métalliques à base d'argent ou d'alliage métallique contenant de l'argent et n + 1 revêtements antireflet (120, 160, 200), lesdits revêtements antireflet comportant chacun au moins une couche diélectrique (125, 165, 205), chaque couche fonctionnelle (140, 180) étant disposée entre deux revêtements antireflet, **caractérisé en ce que** au moins un, voire plusieurs ou chaque, revêtement antireflet situé plus loin de ladite face (29) qu'une couche fonctionnelle comporte une couche diélectrique de nitrure à base d'aluminium et de silicium AlₓSi_{y}N_{z} (165, 205) qui présente une proportion atomique d'aluminium par rapport au total d'aluminium et de silicium comprise entre 91,0 % et 55,0 %, voire entre 90,0 % et 60,0 %, ladite couche diélectrique de nitrure à base d'aluminium et de silicium AlₓSi_{y}N_{z} (165) présentant une épaisseur physique qui est comprise entre 5,0 et 100,0 nm, voire entre 7,0 et 95,0 nm, voire entre 10,0 et 90,0 nm.

2. Matériau selon la revendication 1, ledit revêtement antireflet comportant ladite couche diélectrique de nitrure à base d'aluminium et de silicium AlₓSi_{y}N_{z} (165, 205) comporte une couche diélectrique supérieure de nitrure et/ou d'oxyde située plus loin de ladite face (29) du substrat que ladite couche diélectrique de nitrure à base d'aluminium et de silicium AlₓSi_{y}N_{z} (165, 205), ladite couche diélectrique supérieure étant de préférence au contact, au-dessus de ladite couche diélectrique de nitrure à base d'aluminium et de silicium AlₓSi_{y}N_{z} (165, 205).

3. Matériau selon la revendication 2, dans lequel ladite couche diélectrique supérieure présente une épaisseur comprise entre 5,0 et 75,0 nm, voire entre 7,0 et 70,0 nm, voire entre 10,0 et 65,0 nm.

4. Matériau selon la revendication 2 ou 3, dans lequel ladite couche diélectrique supérieure est une couche diélectrique de nitrure à base de silicium Si_{y'}N_{z'} (167, 207).

5. Matériau selon l'une quelconque des revendications 2 à 4, dans lequel ladite couche diélectrique supérieure de nitrure et/ou d'oxyde est une couche diélectrique d'oxyde (166), de préférence à base de zinc et d'étain.

6. Matériau selon l'une quelconque des revendications 1 à 5, ledit revêtement antireflet comportant ladite couche diélectrique de nitrure à base d'aluminium et de silicium AlₓSi_{y}N_{z} (165, 205), comporte une seconde couche diélectrique de nitrure à base d'aluminium et de silicium AlₓSi_{y}N_{z} (165'), ladite seconde couche diélectrique de nitrure à base d'aluminium et de silicium AlₓSi_{y}N_{z} (165') présentant de préférence une épaisseur physique qui est comprise entre 5,0 et 100,0 nm, voire entre 7,0 et 95,0 nm, voire entre 10,0 et 90,0 nm.

7. Matériau selon l'une quelconque des revendications 1 à 6, dans lequel ladite couche diélectrique, ou lesdites couches diélectriques, de nitrure à base d'aluminium et de silicium AlₓSi_{y}N_{z} (165, 165', 205) ne comporte(nt) pas d'oxygène.

8. Matériau selon l'une quelconque des revendications 1 à 7, dans lequel un revêtement antireflet (20) situé entre ladite face (29) et une couche fonctionnelle métallique (140) qui est la plus proche de ladite face (29) ne comporte pas de couche diélectrique de nitrure à base d'aluminium et de silicium AlₓSi_{y}N_{z} qui présente une proportion atomique d'aluminium par rapport au total d'aluminium et de silicium comprise entre 91,0 % et 55,0 %, voire entre 90,0 % et 60,0 %.

9. Matériau selon l'une quelconque des revendications 1 à 8, dans lequel ledit revêtement antireflet comportant ladite couche diélectrique de nitrure à base d'aluminium et de silicium AlₓSi_{y}N_{z} (165) est situé entre deux couches fonctionnelles.

10. Matériau selon l'une quelconque des revendications 1 à 9, dans lequel ledit empilement de couches minces (14') comporte une couche de protection (300), finale, la plus loin de ladite face (29), présentant une épaisseur comprise entre 0,5 et 4,5 nm.

11. Vitrage multiple comportant un matériau selon l'une quelconque des revendications 1 à 10, et au moins un autre substrat (10), les substrats (10, 30) étant maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats.

12. Vitrage feuilleté (100'') comportant un matériau selon l'une quelconque des revendications 1 à 10, au moins un autre substrat (50) et au moins une feuille intercalaire (40) de matière plastique située entre lesdits substrats (30, 50).

## Patentansprüche

1. Material umfassend ein Glassubstrat (30), das auf einer Seite (29) mit einem Schichtstapel (14') aus Dünnschichten mit Eigenschaften zur Reflexion von Infrarotstrahlung und/oder Sonnenstrahlung beschichtet ist, umfassend n metallische Funktionsschichten (140, 180), wobei n eine ganze Zahl ≥ 2 ist, insbesondere n metallische Funktionsschichten auf Silberbasis oder aus einer Silber enthaltenden Metalllegierung, und n + 1 Antireflexbeschichtungen (120, 160, 200), wobei die genannten Antireflexbeschichtungen jeweils mindestens eine dielektrische Schicht (125, 165, 205) umfassen, wobei jede Funktionsschicht (140, 180) zwischen zwei Antireflexbeschichtungen angeordnet ist, **dadurch gekennzeichnet, dass** mindestens eine, mehrere oder jede Antireflexbeschichtung, die von der genannten Seite (29) weiter entfernt liegt als eine Funktionsschicht, eine dielektrische Nitridschicht auf Aluminium- und Siliziumbasis AlxSiyNz (165, 205) umfasst, die einen atomaren Aluminiumanteil bezogen auf die Summe aus Aluminium und Silizium von zwischen 91,0 % und 55,0 %, insbesondere zwischen 90,0 % und 60,0 %, aufweist, wobei die genannte dielektrische Nitridschicht auf Aluminium- und Siliziumbasis AlxSiyNz (165) eine physikalische Dicke aufweist, die zwischen 5,0 und 100,0 nm, insbesondere zwischen 7,0 und 95,0 nm, insbesondere zwischen 10,0 und 90,0 nm liegt.

2. Material nach Anspruch 1, wobei die genannte Antireflexbeschichtung, die die genannte dielektrische Nitridschicht auf Aluminium- und Siliziumbasis AlxSiyNz (165, 205) umfasst, eine obere dielektrische Nitrid- und/oder Oxidschicht umfasst, die von der genannten Seite (29) des Substrats weiter entfernt liegt als die genannte dielektrische Nitridschicht auf Aluminium- und Siliziumbasis AlxSiyNz (165, 205), wobei die genannte obere dielektrische Schicht vorzugsweise in Kontakt mit und oberhalb der genannten dielektrischen Nitridschicht auf Aluminium- und Siliziumbasis AlxSiyNz (165, 205) angeordnet ist.

3. Material nach Anspruch 2, bei dem die genannte obere dielektrische Schicht eine Dicke von zwischen 5,0 und 75,0 nm, insbesondere zwischen 7,0 und 70,0 nm, insbesondere zwischen 10,0 und 65,0 nm aufweist.

4. Material nach Anspruch 2 oder 3, bei dem die genannte obere dielektrische Schicht eine dielektrische Nitridschicht auf Siliziumbasis Siy'Nz' (167, 207) ist.

5. Material nach einem der Ansprüche 2 bis 4, bei dem die genannte obere dielektrische Nitrid- und/oder Oxidschicht eine dielektrische Oxidschicht (166), vorzugsweise auf Zink- und Zinnbasis, ist.

6. Material nach einem der Ansprüche 1 bis 5, wobei die genannte Antireflexbeschichtung, die die genannte dielektrische Nitridschicht auf Aluminium- und Siliziumbasis AlxSiyNz (165, 205) umfasst, eine zweite dielektrische Nitridschicht auf Aluminium- und Siliziumbasis AlxSiyNz (165') umfasst, wobei die genannte zweite dielektrische Nitridschicht auf Aluminium- und Siliziumbasis AlxSiyNz (165') vorzugsweise eine physikalische Dicke aufweist, die zwischen 5,0 und 100,0 nm, insbesondere zwischen 7,0 und 95,0 nm, insbesondere zwischen 10,0 und 90,0 nm liegt.

7. Material nach einem der Ansprüche 1 bis 6, bei dem die genannte dielektrische Schicht oder die genannten dielektrischen Schichten aus Nitrid auf Aluminium- und Siliziumbasis AlxSiyNz (165, 165', 205) keinen Sauerstoff enthält bzw. enthalten.

8. Material nach einem der Ansprüche 1 bis 7, bei dem eine Antireflexbeschichtung (20), die zwischen der genannten Seite (29) und einer metallischen Funktionsschicht (140) angeordnet ist, welche der genannten Seite (29) am nächsten liegt, keine dielektrische Nitridschicht auf Aluminium- und Siliziumbasis AlxSiyNz umfasst, die einen atomaren Aluminiumanteil bezogen auf die Summe aus Aluminium und Silizium von zwischen 91,0 % und 55,0 %, insbesondere zwischen 90,0 % und 60,0 %, aufweist.

9. Material nach einem der Ansprüche 1 bis 8, bei dem die genannte Antireflexbeschichtung, die die genannte dielektrische Nitridschicht auf Aluminium- und Siliziumbasis AlxSiyNz (165) umfasst, zwischen zwei Funktionsschichten angeordnet ist.

10. Material nach einem der Ansprüche 1 bis 9, bei dem der genannte Schichtstapel (14') aus Dünnschichten eine abschließende Schutzschicht (300), die von der genannten Seite (29) am weitesten entfernt liegt, umfasst, deren Dicke zwischen 0,5 und 4,5 nm liegt.

11. Mehrfachverglasung umfassend ein Material nach einem der Ansprüche 1 bis 10 und mindestens ein weiteres Substrat (10), wobei die Substrate (10, 30) durch eine Rahmenstruktur (90) zusammengehalten werden, wobei die genannte Verglasung eine Trennung zwischen einem Außenraum (ES) und einem Innenraum (IS) bildet und wobei mindestens eine Zwischengasschicht (15) zwischen den beiden Substraten angeordnet ist.

12. Verbundverglasung (100") umfassend ein Material nach einem der Ansprüche 1 bis 10, mindestens ein weiteres Substrat (50) und mindestens eine Zwischenschichtfolie (40) aus Kunststoff, die zwischen den genannten Substraten (30, 50) angeordnet ist.

## Claims

1. A material comprising a glass substrate (30), coated on one face (29) with a stack of thin layers (14') having reflective properties in the infrared and/or in solar radiation comprising n metallic functional layers (140, 180), n being an integer ≥ 2, in particular n metallic functional layers based on silver or on a metal alloy containing silver and n + 1 anti-reflective coatings (120, 160, 200), said anti-reflective coatings each comprising at least one dielectric layer (125, 165, 205), each functional layer (140, 180) being arranged between two anti-reflective coatings, **characterized in that** at least one, or even several or each, anti-reflective coating located further from said face (29) than a functional layer comprises a dielectric layer of nitride based on aluminum and silicon AlₓSi_{y}N_{z} (165, 205) which has an atomic ratio of aluminum relative to the total aluminum and silicon comprised between 91.0% and 55.0%, or even between 90.0% and 60.0%, said dielectric layer of nitride based on aluminum and silicon AlₓSi_{y}N_{z} (165) having a physical thickness that is between 5.0 and 100.0 nm, or even between 7.0 and 95.0 nm, or even between 10.0 and 90.0 nm.

2. The material according to claim 1, said anti-reflective coating comprising said dielectric layer of nitride based on aluminum and silicon AlₓSi_{y}N_{z} (165, 205) comprises an upper dielectric layer of nitride and/or oxide located further from said face (29) of the substrate than said dielectric layer of nitride based on aluminum and silicon AlₓSi_{y}N_{z} (165, 205), said upper dielectric layer preferably being in contact, above said dielectric layer of nitride based on aluminum and silicon AlₓSi_{y}N_{z} (165, 205).

3. The material according to claim 2, wherein said upper dielectric layer has a physical thickness between 5.0 and 75.0 nm, or even between 7.0 and 70.0 nm, or even between 10.0 and 65.0 nm.

4. The material according to claim 2 or 3, wherein said upper dielectric layer is a dielectric layer of silicon-based nitride Si_{y'}N_{z'} (167, 207).

5. The material according to any one of claims 2 to 4, wherein said upper dielectric layer of nitride and/or oxide is a dielectric layer of oxide (166), preferably based on zinc and tin.

6. The material according to any one of claims 1 to 5, said anti-reflective coating comprising said dielectric layer of nitride based on aluminum and silicon AlₓSi_{y}N_{z} (165, 205), comprises a second dielectric layer of nitride based on aluminum and silicon AlₓSi_{y}N_{z} (165'), said second dielectric layer of nitride based on aluminum and silicon AlₓSi_{y}N_{z} (165') preferably having a physical thickness that is between 5.0 and 100.0 nm, or even between 7.0 and 95.0 nm, or even between 10.0 and 90.0 nm.

7. The material according to any one of claims 1 to 6, wherein said dielectric layer, or said dielectric layers, of nitride base on aluminum and silicon AlₓSi_{y}N_{z} (165, 165', 205) do(es) not comprise oxygen.

8. The material according to any one of claims 1 to 7, wherein an anti-reflective coating (20) located between said face (29) and a metallic functional layer (140) which is closest to said face (29) does not comprise a dielectric layer of nitride based on aluminum and silicon AlₓSi_{y}N_{z} which has an atomic ratio of aluminum relative to the total aluminum and silicon of between 91.0% and 55.0%, or even between 90.0% and 60.0%.

9. The material according to any one of claims 1 to 8, wherein said anti-reflective coating comprising said dielectric layer of nitride based on aluminum and silicon AlₓSi_{y}N_{z} (165) is located between two functional layers.

10. The material according to any one of claims 1 to 9, wherein said stack of thin layers (14') comprises a final protective layer (300), furthest from said face (29), having a thickness between 0.5 and 4.5 nm.

11. A multiple glazing comprising a material according to any one of claims 1 to 10, and at least one other substrate (10), the substrates (10, 30) being held together by a frame structure (90), said glazing producing a separation between an exterior space (ES) and an interior space (IS), wherein at least one interlayer gas gap (15) is arranged between the two substrates.

12. A laminated glazing (100") comprising a material according to any one of claims 1 to 10, at least one other substrate (50) and at least one interlayer sheet (40) of plastic material located between said substrates (30, 50).
